# EUROPÄISCHE PATENTANMELDUNG

(11) **EP 1 070 464 A2**
(43) Veröffentlichungstag der Anmeldung: **24.01.2001**
(21) Anmeldenummer: 00113937.7
(22) Anmeldetag: 30.06.2000
(51) Int. Cl.: A45F 5/02

(54) **Adapterteil für ein Mobiltelefon**

(30) Priorität: 07.07.1999 DE 19931338
(71) Anmelder: Böllhoff & Co, GmbH & Co KG, D-33649 Bielefeld (DE)
(72) Erfinder: Hauck, Peter, 33803 Steinhagen (DE); Maciejowski, Thomas, 33824 Werther (DE); Stumpf, Michael, 33611 Bielefeld (DE); Süssenbach, Rainer, 33803 Steinhagen (DE)
(74) Vertreter: Wehnert, Werner, Dipl.-Ing. Patentanwälte Hauck, Graalfs, Wehnert, Döring, Siemons

(57) **Zusammenfassung**

Beschrieben wird ein Adapterteil zum lösbaren Haltern eines Mobiltelefons an einem Gürtelclip, der an einem Gürtel befestigbar ist. Das Adapterteil besteht aus einem Befestigungsabschnitt, der an dem Mobiltelefon befestigbar ist, einem Lagerabschnitt, der in einer U-förmigen Aufnahme des Gürtelclips drehbar aufnehmbar ist, und einem Verbindungsabschnitt zwischen dem Befestigungsabschnitt und dem Lagerabschnitt. Der Verbindungsabschnitt weist ein Gelenk auf, das eine Schwenkbewegung des Befestigungsabschnittes relativ zu dem Lagerabschnitt ermöglicht. Hierdurch wird vermieden, daß durch eine unbeabsichtigte Auslenkbewegung des Mobiltelefons gegenüber dem am Gürtel befestigten Gürtelclip das Adapterteil aus dem Mobiltelefon herausgebrochen und das Mobiltelefon dadurch zerstört wird.

## Beschreibung

Die vorliegende Erfindung betrifft ein Adapterteil zum lösbaren Haltern eines Mobiltelefons an einem Gürtelclip, mit einem Befestigungsabschnitt, der an dem Mobiltelefon befestigbar ist, einem Lagerabschnitt, der in einer U-förmigen Aufnahme des Gürtelclips drehbar aufnehmbar ist, und einem Verbindungsabschnitt zwischen dem Befestigungsabschnitt und dem Lagerabschnitt. Die Erfindung betrifft ferner ein Verfahren zum Herstellen eines Adapterteils.

Bei einem vorbekannten Adapterteil dieser Art ist der Befestigungsabschnitt mit einem einteilig angeformten Haken versehen, der in die Batterieöffnung des Mobiltelefons (Handys) einhängbar ist und dann durch den die Batterieöffnung verschließenden Deckel gesichert wird. Der Befestigungsabschnitt besteht in diesem Fall aus einem rotationssymmetrischen knopfartigen Teil, das in die U-förmige Aufnahme des Gürtelclips einsteckbar ist und in dieser durch eine Klinke gesichert wird. Der Clip wiederum ist auf einen Gürtel der Bedienungsperson aufsteckbar. Auf diese Weise läßt sich somit das Adapterteil mit dem daran befestigten Mobiltelefon am Gürtel der Bedienungsperson anbringen.

Das vorbekannte Adapterteil mit seinem Befestigungsabschnitt, Lagerabschnitt und Verbindungsabschnitt ist als einstückiges Teil aus Hartkunststoff ausgebildet, so daß sich eine sichere Verbindung zwischen dem Gürtel und dem Mobiltelefon ergibt. Allerdings besteht hierbei die Gefahr, daß bei einer unbeabsichtigten Auslenkbewegung zwischen dem Mobiltelefon und dem Gürtelclip, beispielsweise beim Niedersetzen der Bedienungsperson, das Adapterteil aus dem Gehäuse des Mobiltelefons herausbricht. Das Gehäuse des Mobiltelefons und damit das gesamte Mobiltelefon sind dann im allgemeinen nicht mehr zu verwenden.

Der vorliegenden Erfindung liegt die Aufgabe zugrunde, ein Adapterteil der eingangs angegebenen Art so weiterzubilden, daß die Gefahr einer Zerstörung des Mobiltelefons durch eine unbeabsichtigte Auslenkbewegung zwischen dem Mobiltelefon und dem Gürtelclip vermieden oder zumindest verringert wird.

Diese Aufgabe wird durch die im Patentanspruch 1 definierte Erfindung gelöst.

Erfindungsgemäß weist der Verbindungsabschnitt des Adapterteils ein Gelenk auf, das eine Schwenkbewegung des Befestigungsabschnittes relativ zu dem Lagerabschnitt ermöglicht. Es sind somit relativ große Auslenkbewegungen zwischen dem Mobiltelefon und dem Gürtelclip möglich, ohne daß das Adapterteil aus dem Gehäuse des Mobiltelefons herausbricht.

Das Gelenk könnte als herkömmliches zweiteiliges Gelenk ausgebildet werden. Vorzugsweise besteht das Gelenk jedoch aus einem elastischen Materialabschnitt, insbesondere einem querschnittsverringerten Bereich des Verbindungsabschnittes, der mit dem übrigen Material des Verbindungsabschnittes einstückig ausgebildet ist. Dies vereinfacht die konstruktive Gestaltung des Adapterteils und verringert den Herstellungsaufwand.

Zweckmäßigerweise wird das Adapterteil aus zwei Teilen hergestellt, und zwar einem den Befestigungsabschnitt bildenden Teil aus einem relativ steifen Material und einem den Rest des Adapterteils bildenden, das Gelenk enthaltenden zweiten Teil aus einem relativ biegsamen Material. Auf diese Weise wird einerseits eine sichere Halterung des Adapterteils am Mobiltelefon und andererseits die erwünschte Auslenkbarkeit zwischen Mobiltelefon und Gürtelclip sichergestellt.

Weitere vorteilhafte Ausgestaltungen der Erfindung sind in den Unteransprüchen definiert.

Anhand der Zeichnungen werden Ausführungsbeispiele der Erfindung näher erläutert. Es zeigt:
Fig. 1 eine Teildraufsicht auf ein Mobiltelefon mit einem Adapterteil;
Fig. 2 eine Schnittansicht längs der Linie II-II in Fig. 1;
Fig. 3 eine Draufsicht auf einen Gürtelclip in einem gegenüber den Fign. 1 und 2 verkleinerten Maßstab;
Fig. 4 eine Schnittansicht längs der Linie IV-IV in Fig. 3;
Fig. 5 eine Draufsicht auf das Adapterteil in den Fign. 1 und 2 in vergrößertem Maßstab;
Fig. 6 eine Schnittansicht längs der Linie VI-VI in Fig. 5;
Fign. 7, 8 den Fign. 5,6 entsprechende Ansichten einer abgewandelten Ausführungsform des Adapterteils.

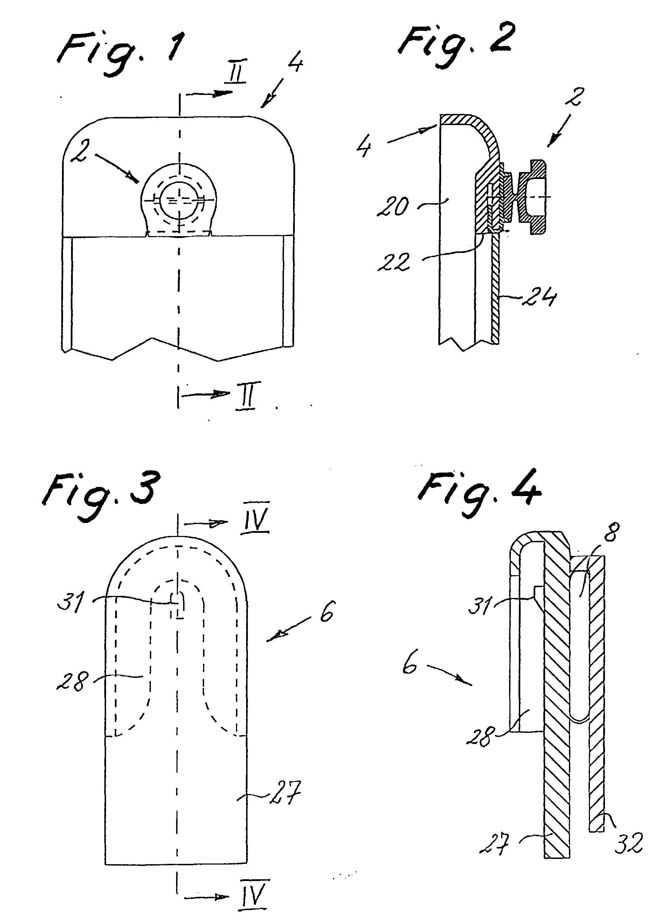

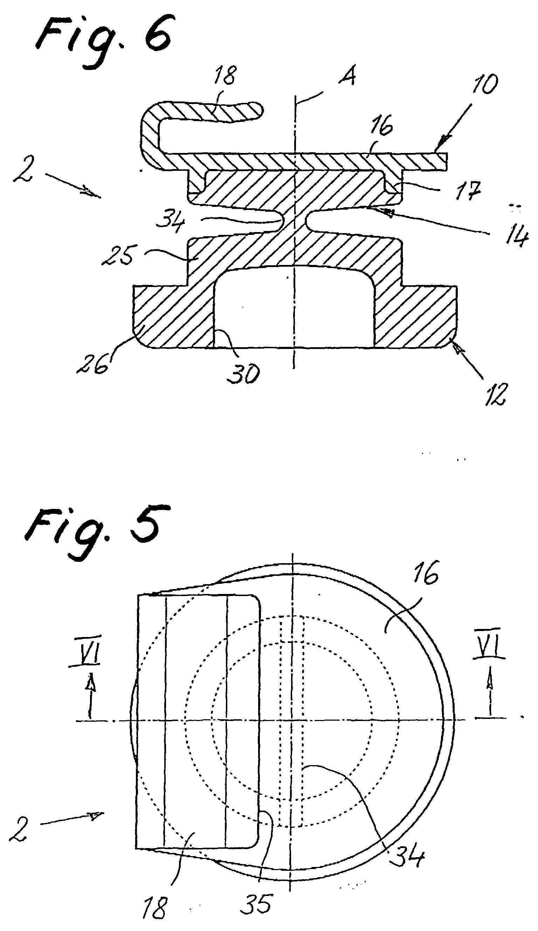

Das in Fig. 2 zu sehende und in den Fign. 5 und 6 genauer dargestellte Adapterteil 2 dient dazu, ein Mobiltelefon 4 (Fign. 1, 2) mit einem Gürtelclip 6 (Fign. 3, 4) lösbar zu verbinden. Der Gürtelclip 6 ist auf einen von einer Bedienungsperson getragenen Gürtel 8 aufsteckbar, wie in Fig. 4 angedeutet ist.

Das Adapterteil 2 besteht aus einem Befestigungsabschnitt 10 zur Befestigung am Mobiltelefon 2, einem Lagerabschnitt 12 zum Anbringen am Gürtelclip 6 und einem Verbindungsabschnitt 14, der den Befestigungsabschnitt 10 mit dem Lagerabschnitt 12 einstückig verbindet.

Der Befestigungsabschnitt 10 besteht aus einem plattenförmigen Teil 16 mit einem Ansatz in Form eines Hakens 18. Wie in Fig. 2 dargestellt, wird der Haken 18 in eine Batterieöffnung 22 des Gehäuses 20 des Mobiltelefons eingehängt und durch einen Deckel 24 zum Verschließen der Batterieöffnung 22 gesichert. Hierdurch ist das Adapterteil 2 am Gehäuse 20 des Mobiltelefons 4 lösbar befestigt. Das plattenförmige Teil 16 ist auf seiner vom Haken 18 abgewandten Seite mit einem ringförmigen Ansatz 17 versehen, über den das plattenförmige Teil 16 mit dem Rest des Adapterteils 2 verbunden wird, wie im folgenden noch genauer erläutert wird.

Der Lagerabschnitt 12 besteht aus einem bezüglich einer Achse A rotationssymmetrisch ausgebildeten knopfartigen Teil mit einem zylindrischen Abschnitt 25 kleineren Durchmessers und einem zylindrischen Abschnitt 26 größeren Durchmessers. Wie in den Fign. 3 und 4 dargestellt ist, besteht der Gürtelclip 6 aus einem plattenförmigen Teil 27 mit einer U-förmigen Aufnahme 28, in die der Lagerabschnitt 12 mit seinem Abschnitt 26 größeren Durchmessers eingeschoben werden kann. Der Lagerabschnitt 12 ist mit einer Ausnehmung 30 versehen, in die eine am Gürtelclip 6 vorgesehene Klinke 31 greift, um das Adapterteil 2 und somit das Mobiltelefon 4 am Gürtelclip zu sichern. Das plattenförmige Teil 27 des Gürtelclips 6 ist mit einem elastischen Clipteil 32 versehen, durch den der Gürtelclip 6 am Gürtel 8 anbringbar ist, wie in Fig. 4 zu sehen ist.

Der Verbindungsabschnitt 14 weist ein Gelenk 34 auf, das Schwenkbewegungen des Befestigungsabschnitts 10 relativ zu dem Lagerabschnitt 12 und somit zwischen dem Mobiltelefon 4 und dem am Gürtel 8 befestigten Gürtelclip 6 ermöglicht. Im dargestellten Ausführungsbeispiel der Fign. 5, 6 besteht das Gelenk 34 aus einem querschnittsverringerten Bereich des Verbindungsabschnittes 14, also aus einem Materialabschnitt, der mit dem übrigen Material des Verbindungsabschnittes 14 einteilig ausgebildet ist. Wie in Fig. 5 durch gestrichelte Linien angedeutet ist, besteht der das Gelenk 34 bildende querschnittsverringerte Bereich aus einem schmalen Steg, der senkrecht zu der Symmetrieachse A und parallel zur freien Kante 35 des Hakens 18 verläuft. Das Gelenk 34 ermöglicht in erster Linie Schwenkbewegungen zwischen dem Befestigungsabschnitt 10 und dem Lagerabschnitt 12 um eine Achse, die senkrecht zur Symmetrieachse A und parallel zur Kante 35 des Hakens 18 verläuft.

Es wäre jedoch auch ohne weiteres möglich, den das Gelenk 34 bildenden Materialabschnitt rotationssymmetrisch zur Symmetrieachse A auszubilden, so daß dann allseitige Schwenkbewegungen zwischen dem Befestigungsabschnitt 10 und dem Lagerabschnitt 12 möglich wären. Auch könnte das Gelenk 34 als zweiteiliges Gelenk, beispielsweise als Scharnier oder Universalgelenk, ausgebildet werden.

Wie bereits aus der bisherigen Beschreibung und insbesondere Fig. 6 deutlich geworden sein dürfte, setzt sich das Adapterteil 2 aus zwei Teilen zusammen, und zwar dem plattenförmigen Teil 16 des Befestigungsabschnittes 10 und dem einstückig ausgebildeten restlichen Teil des Adapterteils 2, der aus dem Lagerabschnitt 12 und dem Verbindungsabschnitt 14 besteht. Zweckmäßigerweise besteht das plattenförmige Teil 16 aus einem vergleichsweise steifen Material, während der Rest des Adapterteils 2 aus einem vergleichsweise biegsamen Material besteht, der für die erforderliche Elastizität des Gelenkes 34 sorgt. Das relativ steife Material ist zweckmäßigerweise ein Hartkunststoff, insbesondere ein füllstoffverstärkter hochfester Thermoplast. Als Thermoplast kommt beispielsweise Polyamid, Polypropylen oder Polyester in Frage, während der zur Verstärkung dienende Füllstoffvorzugsweise aus Glasfasern oder aber auch aus Kohlefasern od. dgl. bestehen kann.

Der den Lagerabschnitt 12 und den Verbindungsabschnitt 14 bildende Rest des Adapterteils 2 besteht zweckmäßigerweise aus einem thermoplastischen Elastomer oder Gummi, beispielsweise einem thermoplastischen Polyurethan (PUR), Polyesterelastomer oder einem hochschlagzäh eingestellten thermoplastischen Werkstoff.

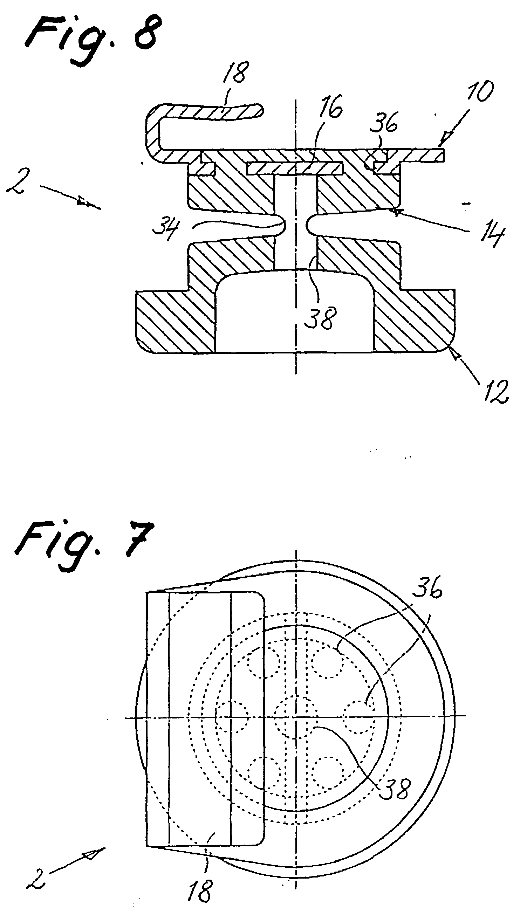

Zur Herstellung des in den Fign. 6 und 7 gezeigten Adapterteils 2 wird zunächst das plattenförmige Teil 16 mit dem Haken 18 und dem ringförmigen Ansatz 17 aus einem Hartkunststoff, wie oben erwähnt, durch Spritzgießen, beispielsweise bei einer Temperatur von 250 bis 260°, hergestellt. Anschließend wird auf das plattenförmige Teil 16 das thermoplastische Elastomer, dessen Schmelztemperatur normalerweise unter 250° liegt, bei einer Temperatur aufgespritzt, die größer ist als die Schmelztemperatur des Hartkunststoffes des plattenförmigen Teils 16. Somit wird das plattenförmige Teil 16 im Bereich innerhalb des ringförmigen Ansatzes 17 an seiner Oberfläche aufgeschmolzen, wodurch es zu einer Vernetzung zwischen dem Hartkunststoff des plattenförmigen Teils 16 und dem aufgespritzten Elastomer des Verbindungsabschnittes 14 und Lagerabschnittes 12 kommt. Es entsteht somit ein Adapterteil 2, das einerseits aus einem relativ harten Material zur sicheren Verbindung mit dem Mobiltelefon 2 und andererseits aus einem relativ biegsamen Material für die erforderliche Elastizität des Gelenkes 34 besteht, wobei jedoch beide unterschiedlichen Materialien sicher miteinander verbunden sind.

Das in den Fign. 7 und 8 dargestellte Ausführungsbeispiel des Adapterteils 2 entspricht in seinem grundsätzlichen Aufbau dem in den Fign. 5 und 6 gezeigten Ausführungsbeispiel; es wurden daher für sich entsprechende Bestandteile dieselben Bezugszeichen verwendet.

Unterschiedlich gegenüber dem Ausführungsbeispiel der Fign. 5 und 6 ist im wesentlichen nur, daß das plattenförmige Teil 16 des Befestigungsabschnittes 10 nicht aus einem Hartkunststoff, sondern aus einem Metallblech, insbesondere Stahlblech hergestellt ist. Das plattenförmige Teil 16 ist in diesem Fall mit mehreren Löchern 36 versehen, die eine formschlüssige Verbindung des plattenförmigen Teils 16 mit dem Rest des Adapterteils 2 ermöglicht, welcher wie bei dem Ausführungsbeispiel der Fign. 5 und 6 aus einem thermoplastischen Elastomer oder Gummi besteht.

Zur Herstellung des in den Fign. 7 und 8 gezeigten Adapterteils 2 wird zunächst das plattenförmige Teil 16 mit dem Haken 18 und den Löchern 36 aus einem Metallblech hergestellt. Anschließend wird das thermoplastische Elastomer durch Spritzgießen in die Löcher 36 und um das plattenförmige Teil 36 herum mit dem plattenförmigen Teil 16 verbunden, wobei eine in dem Adapterteil 2 vorgesehene Öffnung 38 zum Abstützen des plattenförmigen Teils 16 dient. Es entsteht somit wiederum eine feste Verbindung zwischen dem plattenförmigen Teil 16 und dem Rest des Adapterteils 2.

## Patentansprüche

1. Adapterteil zum lösbaren Haltern eines Mobiltelefons an einem Gürtelclip, mit einem Befestigungsabschnitt, der an dem Mobiltelefon befestigbar ist, einem Lagerabschnitt, der in einer U-förmigen Aufnahme des Gürtelclips drehbar aufnehmbar ist, und einem Verbindungsabschnitt zwischen dem Befestigungsabschnitt und dem Lagerabschnitt, dadurch gekennzeichnet, daß der Verbindungsabschnitt (14) ein Gelenk (34) aufweist, das eine Schwenkbewegung des Befestigungsabschnittes (10) relativ zu dem Lagerabschnitt (12) ermöglicht.

2. Adapterteil nach Anspruch 1, dadurch gekennzeichnet, daß das Gelenk (34) aus einem elastischen Materialabschnitt besteht, der mit dem übrigen Material des Verbindungsabschnittes (14) einteilig ausgebildet ist.

3. Adapterteil nach Anspruch 2, dadurch gekennzeichnet, daß der das Gelenk (34) bildende elastische Materialabschnitt aus einem querschnittsverringerten Bereich des Verbindungsabschnittes (14) besteht.

4. Adapterteil nach Anspruch 3, bei dem der Lagerabschnitt (12) und zumindest ein Teil des Verbindungsabschnittes (14) rotationssymmetrisch ausgebildet sind, dadurch gekennzeichnet, daß der das Gelenk (34) bildende querschnittsverringerte Bereich aus einem quer zur Symmetrieachse (A) verlaufenden schmalen Materialsteg besteht.

5. Adapterteil nach einem der vorhergehenden Ansprüche, dadurch gekennzeichnet, daß der Befestigungsabschnitt (10) ein plattenförmiges Teil (16) mit einem in das Gehäuse (12) des Mobiltelefons (4) einhängbaren Haken (18) aufweist, das mit dem einstückig ausgebildeten Rest des Adapterteils (2) unlösbar verbunden ist.

6. Adapterteil nach einem der vorhergehenden Ansprüche, dadurch gekennzeichnet, daß der Befestigungsabschnitt (10) aus einem relativ steifen Material und der Rest des Adapterteils (2) aus einem relativ biegsamen Material besteht.

7. Adapterteil nach den Ansprüchen 5 und 6, dadurch gekennzeichnet, daß das plattenförmige Teil (16) des Befestigungsabschnittes (10) aus einem Hartkunststoff und der Rest des Adapterteils (2) aus einem Elastomer oder Gummi besteht, der mit dem Hartkunststoff vernetzt ist.

8. Adapterteil nach Anspruch 7, dadurch gekennzeichnet, daß der Hartkunststoff ein füllstoffverstärkter hochfester Thermoplast ist.

9. Adapterteil nach den Ansprüchen 5 und 6, dadurch gekennzeichnet, daß das plattenförmige Teil (16) des Befestigungsabschnittes (10) aus einom Metallblech und der Rest des Adapterteils (2) aus einem Elastomer oder Gummi besteht, der durch Spritzgießen mit dem Metallblech formschlüssig verbunden ist.

10. Verfahren zum Herstellen eines Adapterteils nach Anspruch 7 oder 8, dadurch gekennzeichnet, daß das plattenförmige Teil (16) des Befestigungsabschnittes (10) durch Spritzgießen aus Hartkunststoff hergestellt wird und danach der Rest des Adapterteils (2) durch Aufspritzen von Elastomer auf das plattenförmige Teil (16) bei einer Temperatur oberhalb der Schmelztemperatur des Hartkunststoffes mit dem plattenförmigen Teil (10) vernetzt wird.

11. Verfahren zum Herstellen eines Adapterteils nach Anspruch 9, dadurch gekennzeichnet, daß das plattenförmige Teil (16) des Befestigungsabschnittes (10) aus einem Metallblech hergestellt und hierbei mit mehreren Löchern (36) versehen wird und danach der Rest des Adapterteils (2) durch Spritzgießen von Elastomer oder Gummi in die Löcher (34) und um das plattenförmige Teil (10) herum mit diesem formschlüssig verbunden wird.
